(19) Europäisches Patentamt
European Patent Office
Office européen des brevets

(11) **EP 4 270 624 A1**

(12) **EUROPEAN PATENT APPLICATION**
published in accordance with Art. 153(4) EPC

(43) Date of publication:
**01.11.2023 Bulletin 2023/44**

(21) Application number: **22859453.7**

(22) Date of filing: **09.03.2022**

(51) International Patent Classification (IPC):
***H01M 50/409*** (2021.01)

(52) Cooperative Patent Classification (CPC):
Y02E 60/10

(86) International application number:
**PCT/CN2022/079936**

(87) International publication number:
**WO 2023/168626 (14.09.2023 Gazette 2023/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: CSI Chemical Co., Ltd.
**Nantong City, Jiangsu 226133 (CN)**

(72) Inventors:
• **CHIU, Jian Ming**
**Nantong**
**Jiangsu 226133 (CN)**

• **TSENG, Chi Yung**
**Nantong**
**Jiangsu 226133 (CN)**
• **WANG, Shiu Hui**
**Nantong**
**Jiangsu 226133 (CN)**

(74) Representative: **Betten & Resch**
**Patent- und Rechtsanwälte PartGmbB**
**Maximiliansplatz 14**
**80333 München (DE)**

(54) **SEPARATOR AND METHOD FOR PREPARING SEPARATOR**

(57)    A method for forming soluble polymer is provided. The method includes polymerizing a dianhydride monomer, a diamine monomer, and solvent to form soluble polymer. The dianhydride monomer includes 4,4'-4,4'-oxydiphthalic anhydrid, 3,3',4,4'-biphenyltetracarboxylic dianhydride, and 4,4'-(Hexafluoroisopropylidene) diphthalic anhydride. The diamine monomer includes 3,4'-oxydianiline, 2,2'-Bis(trifluoromethyl)benzidine, and 3,3'-dimethylbenzidine.

10

Fig. 1

**Description**

**BACKGROUND OF THE INVENTION**

**Field of the Invention**

The present disclosure relates to a preparation method of a polyimide separator with controllable wettability with mass production, and further includes a separator that can be applied to lithium-ion batteries.

**Description of the Related Art**

In recent decades, lithium-ion secondary batteries have become one of the main energy sources for communication electronics due to their high specific energy, high voltage, small size, light weight, and zero memory effect. However, in many situations, lithium-ion secondary batteries have dangers such as smoke, fire, explosions, and other hidden dangers that endanger the safety of users due to misuse. Therefore, improving the safety of lithium-ion batteries is the key to the development and promotion of lithium-ion batteries in automotive and other fields.
In order to avoid short circuit, a separator is disposed between the positive and negative electrodes of the lithium-ion battery to avoid the positive and negative electrodes in direct contact with each other. However, the integrity under high temperature of the existing lithium-ion battery separators, such as polyethylene (PE), polypropylene (PP), etc., are not totally reliable. Therefore, when conducting safety tests such as overheating or overcharging, problems often occur due to shrinking of the battery separator, causing short circuit inside the battery, and thermal runaway problems are raised. Therefore, the selection of battery separators with high heat resistance has become one of the keys for solving the safety issue of lithium-ion batteries.

**BRIEF SUMMARY OF THE INVENTION**

A method for forming soluble polymer is provided. The method includes polymerizing a dianhydride monomer, a diamine monomer, and solvent to form soluble polymer. The dianhydride monomer includes 4,4'-4,4'-oxydiphthalic anhydrid, 3,3',4,4'-biphenyltetracarboxylic dianhydride, and 4,4'-(Hexafluoroisopropylidene) diphthalic anhydride. The diamine monomer includes 3,4'-oxydianiline, 2,2'-Bis(trifluoromethyl)benzidine, and 3,3'-dimethylbenzidine.
In some embodiments, the soluble polymer includes polyvinyl alcohol (PVA), polyimide (PI), polyvinylidene difluoride (PVDF), poly(methyl methacrylate) (PMMA), carboxymethylcellulose (CMC), or polyurethane (PU) elastomer.
In some embodiments, the molar ratio of the dianhydride monomer to the diamine monomer is between 0.95 and 1.1.
In some embodiments, the method for forming the soluble polymer further includes adding the soluble polymer into first solvent to form a fiber, and washing the fiber by second solvent, wherein the first solvent and the second solvent include methanol.
In some embodiments, the method for forming the soluble polymer further includes adding the fiber into third solvent to get soluble polymer slurry.
In some embodiments, the third solvent includes tetrahydrofuran (THF).
A method for forming a separator is provided. The method includes adding the soluble polymer achieve in claim 1 into polyimide acid to get slurry, wherein in the slurry, the weight percentage of the soluble polymer in the polyimide acid is between 5% to 50%.
In some embodiments, the method for forming the separator further includes coating the slurry to get a wet membrane, and adding solvent to the wet membrane, wherein the solvent includes deionized water, ethanol, isopropanol, and acetone.
In some embodiments, the method for forming the separator further includes heating the wet membrane between 80°C to 250°C for 1 to 60 minutes to cure the wet membrane for gaining the separator.
In some embodiments, the glass transition temperature of the separator is higher than 250°C.
In some embodiments, the glass transition temperature of the separator is less than 350°C.
In some embodiments, the thickness of the separator is between 5$\mu$m to 50$\mu$m.
In some embodiments, the porosity of the separator is between 45% and 85%.
In some embodiments, the porosity of the separator is between 50% and 80%.
In some embodiments, the electrolyte uptake of the separator to a solution of 1M lithium hexafluorophosphate (LiPF$_6$) dissolved in a solvent with ethylene carbonate (EC) and dimethyl carbonate (DMC) having a 1:1 volume ratio (EC/DMC) is higher than 200wt%.
In some embodiments, the contact angle of the separator of distilled water is less than 100 degrees.
In some embodiments, the contact angle of the separator of a solution of 1M lithium hexafluorophosphate

(LiPF$_6$) dissolved in a solvent with ethylene carbonate (EC) and dimethyl carbonate (DMC) having a 1:1 volume ratio (EC/DMC) is less than 60 degrees.

A method of testing a battery is provided. The method includes placing the separator of claim 9 between a cathode and an anode in a shell, adding electrode between the cathode and the anode to form a battery, and heating the battery.

In some embodiments, the temperature during the heating he higher than 120°C.

In some embodiments, the time during the heating is longer than 30 minutes.

**BRIEF DESCRIPTION OF THE DRAWINGS**

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.

FIG. 1 shows a method for forming the separator in some embodiments of the present disclosure.

FIG. 2 shows the result of contact angle test of a polyimide separator and a commercial Celgard 2325 separator to the electrolyte in some embodiments of the present disclosure.

FIG. 3 shows the result of glass transition temperature test of the polyimide separator in some embodiments of the present disclosure.

FIG. 4 shows the result of the heat resistance test of the polyimide separator and the commercial Celgard 2325 separator under different temperatures in some embodiments of the present disclosure.

**DETAILED DESCRIPTION OF THE INVENTION**

The following disclosure provides many different embodiments, or examples, for implementing different features of the provided subject matter. Specific examples of components and arrangements are described below to simplify the present disclosure. These are, of course, merely examples and are not intended to be limiting. For example, in some embodiments, the formation of a first feature over or on a second feature in the description that follows may include embodiments in which the first and second features are in direct contact, and may also include embodiments in which additional features may be disposed between the first and second features, such that the first and second features may not be in direct contact.

In addition, the present disclosure may repeat reference numerals and/or letters in the various examples. This repetition is for the purpose of simplicity and clarity and does not in itself dictate a relationship between the various embodiments and/or configurations discussed. Moreover, the formation of a feature on, connected to, and/or coupled to another feature in the present disclosure that follows may include embodiments in which the features are in direct contact, and may also include embodiments in which additional features may be disposed interposing the features, such that the features may not be in direct contact. In addition, spatially relative terms, for example, "vertical," "above," "over," "below,", "bottom," etc. as well as derivatives thereof (e.g., "downwardly," "upwardly," etc.) are used in the present disclosure for ease of description of one feature's relationship to another feature. The spatially relative terms are intended to cover different orientations of the device, including the features.

The terms "about" and "substantially" typically mean +/- 20% of the stated value, more typically +/- 10% of the stated value, more typically +/- 5% of the stated value, more typically +/- 3% of the stated value, more typically +/- 2% of the stated value, more typically +/- 1% of the stated value and even more typically +/- 0.5% of the stated value. The stated value of the present disclosure is an approximate value. When there is no specific description, the stated value includes the meaning of "about" or "substantially".

Furthermore, the phrase "in a range between a first value and a second value" or "in a range from a first value to a second value" indicates that the range includes the first value, the second value, and other values between them.

The order of the steps in the present disclosure is merely an example, and the sequence of the steps may be reasonably interchanged if the result is not affected.

In order to prevent short circuit from occurring when the cathode and the anode of a lithium-ion battery being in contact with each other, a separator is required between the electrodes to physically separate the cathode and the anode. Moreover, the separator should be a porous separator to allow ions travel between the cathode and the anode.

Polyimide (PI) has good thermal stability, chemical stability, and outstanding mechanical properties, and has a long-term operating temperature up to 300 °C, so it is the best material for a thin film insulator. When comparing with polyolefin separators, polyimide separators have better wettability for lithium-ion batteries electrolyte due to the polar groups on the polyimide separators. Therefore, polyimide is a material that is safe and suitable for high temperature-resistant battery separators.

In some embodiments of the present disclosure, dianhydride acid with multifunctional groups and diamines are firstly polymerized to obtain a soluble polymer, and then the soluble polymer is introduced into a poly(amic acid, PAA) system to get a wet membrane by coating. The soluble polymer may be randomly distributed in the polyimide acid, and then the wet membrane is immersed in different solvents to remove the soluble polymer. Afterwards, the wet membrane is baked under high temperature, so that the obtained membrane has porous characteristics. Polyimide membranes with different wettability may be obtained by changing the amount of soluble polymer added in the membranes. The separator has high heat resistance and excellent electrolyte wettability, and the preparation process is simple and diverse, the requirement is low, so the membrane is suitable for industrial production.

A polyimide membrane with better wettability by the aforementioned method is also provided in some embodiments of the present disclosure. When the separator is applied in lithium-ion batteries, the manufacture process may have advantages such as low energy consumption and low pollution. For example, when the polyimide separator is applied to a lithium-ion battery in a normal environment (e.g., room temperature), the charge-discharge efficiency of this kind of battery may match the that of a battery with the commercial separator. If a lithium-ion battery with such separator is heated at a high temperature environment (140°C) for one hour, the battery can keep operating, but the battery with normal separator can no longer operate at a same time. Therefore, the polyimide membrane produced by the method of the present disclosure has high stability, excellent electrolyte affinity, and high heat resistance, and may be used as a separator for lithium-ion batteries to improve the known problems of the polyethylene (PE) and polypropylene (PP) separators, such as instability and low electrolyte wettability under high temperature.

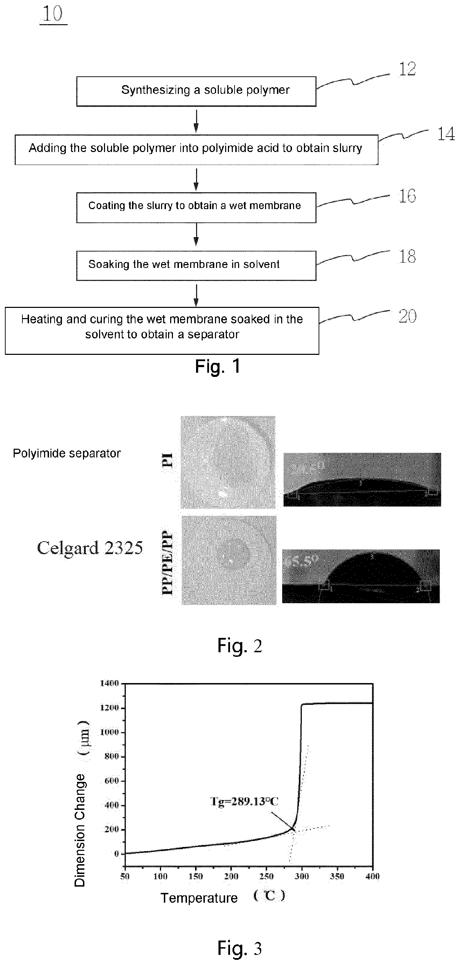

In order to make the present disclosure more clearly understood, the manufacturing process of the membrane in some embodiments of the present disclosure is briefly described with FIG. 1. FIG. 1 shows a method 10 of making a separator in some embodiments of the present disclosure. As shown in FIG. 1, the method 10 of making the separator includes a step 12 of synthesizing a soluble polymer, a step 14 of adding the soluble polymer into polyimide acid to obtain slurry, a step 16 of coating the slurry to obtain a wet membrane, a step 18 of soaking the wet membrane in solvent, and a step 20 of heating and curing the wet membrane soaked in the solvent to obtain a separator.

In some embodiments, the soluble polymer is formed by polymerizing dianhydride monomers, diamine monomers, and solvents, as described in the step 12. In some embodiments, the dianhydride monomers may include at least one of 4,4'-oxydiphthalic anhydride (ODPA), 3,3',4,4'-biphenyltetracarboxylic dianhydride (BPDA), and 4,4'-(Hexafluoroisopropylidene)diphthalic anhydride (6FDA). The diamine monomers may include at least one of 3,4'-oxydianiline (ODA), 2,2'-bis(trifluoromethyl)benzidine (TFMB), and 3,3'-Dimethylbenzidine (TOL). In some embodiments, the soluble polymer may include polyvinyl alcohol (PVA), polyimide (PI), polyvinylidene difluoride (PVDF), poly(methyl methacrylate) (PMMA), carboxymethylcellulose (CMC), or polyurethane (PU) elastomer. In some embodiments, the molar ratio of the dianhydride monomers to the diamine monomers may be between about 0.95 to about 1.1, such as may be about 0.97 to about 1.05, about 0.99 to about 1.02, or may be about 1:1. If the molar ratio of the dianhydride monomers to the diamine monomers is within the abovementioned range, the soluble polymer may be much suitable for forming the separator. In some embodiments, the method for forming the soluble polymer includes adding the soluble polymer into first solvent to form fiber and washing the fiber by second solvent. In some embodiments, the first solvent and the second solvent include methanol. Therefore, the soluble polymer which is soluble in the solvent may be formed. In some embodiments, the method for forming the soluble polymer further includes adding the fiber into third solvent to get soluble polymer slurry. In some embodiments, the molar ratio of the dianhydride monomers to the diamine monomers may be between about 0.95 to about 1.1. In some embodiments, the third solvent includes tetrahydrofuran.

In some embodiments, a method for forming separator by the abovementioned soluble polymer is provided. As described in the step 14, the method includes adding the soluble polymer into polyimide acid to get the slurry. The ratio of the soluble polymer in the slurry may be adjusted based on actual requirement. For example, the weight percentage of the soluble polymer in the polyimide acid may be between about 5% to about 50% to ensure the physical property of the gained separator is reliable.

In some embodiments, as described in the step 16, the method for forming the separator further includes coating the slurry to get a wet membrane, such as by a scraper or spin coating. In some embodiments, as described in the step 18, the method for forming the separator further includes soaking the wet membrane into solvent, and the solvent may include suitable solvents such as deionized water, ethanol, isopropanol, or acetone.

In some embodiments, as described in the step 20, the method for forming the separator further includes heating the wet membrane between 80°C to 250°C for about 1 to 60 minutes to cure the wet membrane for gaining the separator. In some embodiments, the glass transition temperature of the separator may be higher than 250°C. In some embodiments, the thickness of the separator may be between 5μm to 50μm. In some embodiments, the porosity of the separator may be between about 45% and about 85%, such as may be between about 50% and about 80%. It should be noted that the soluble polymer and the solvent in the polyimide acid may be removed in the step 20 to achieve the porous polyimide separator.

The details of the present disclosure will be further described with the embodiments.

[Forming the soluble polymer - embodiment 1]

18.0212g of 2,2'-bis(trifluoromethyl)benzidine (TFMB) is added into 150g of m-cresol solvent under nitrogen environment and then stirred at 25°C for 30 minutes. After the TFMB is completely dissolved, 25g of (hexafluoroisopropylidene)diphthalic anhydride (6FDA) and 22g of m-cresol solvent are added into the solution, and then the solution is stirred at 22°C for 30 minutes. Afterwards, the solution is stirred at 90°C for 3 hours, and then stirred at 180°C for 16 hours.
The temperature is then lower to room temperature (25°C), and then 50g of m-cresol solvent is added to achieve diluted slurry. The diluted slurry is gradually dropped into 800 ml of methanol solution to form long and thin fibers, and the fibers are thoroughly washed with fresh methanol to remove residual m-cresol solvent. Finally, the fiber is dried in a vacuum oven at 150 °C for 24 hours to obtain the soluble polymer.
Next, 37.5 g of the dried fibers are added into 112.5 g of tetrahydrofuran (THF) and stirred for 12 hours, followed by filtration using 1μm filter paper to obtain a clear soluble polymer slurry.

[Forming the soluble polymer - embodiment 2]

21.4275g of 2,2'-bis(trifluoromethyl)benzidine (TFMB) is added into 150g of m-cresol solvent under nitrogen environment and then stirred at 25°C for 30 minutes. After the TFMB is completely dissolved, 15g of 1,2,4,5-cyclohexanetetracarboxylic dianhydride (HPMDA) and 50g of m-cresol solvent are added into the solution, and then the solution is stirred in 22°C for 30 minutes. Afterwards, the solution is stirred at 90°C for 3 hours, and then stirred at 180°C for 16 hours.
The temperature is then lower to room temperature (25°C), and then 50g of m-cresol solvent is added to achieve diluted slurry. The diluted slurry is gradually dropped into 800 ml of methanol solution to form long and thin fibers, and the fibers are thoroughly washed with fresh methanol to remove residual m-cresol solvent. Finally, the fiber is dried in a vacuum oven at 150 °C for 24 hours to obtain the soluble polymer.
Next, 37.5 g of the dried fibers are added into 112.5 g of tetrahydrofuran (THF) and stirred for 12 hours, followed by filtration using 1μm filter paper to obtain a clear soluble polymer slurry.

[Preparation of polyimide acid]

13.6117g of 3,4'-oxydianiline (ODA) is added in 150g of anhydrous dimethylacetamide (DMAc) under nitrogen environment and then stirred at 25°C for 30 minutes. After the ODA is completely dissolved, 20g of 3,3',4,4'-biphenyltetracarboxylic dianhydride (BPDA) and 18.2 g of anhydrous DMAc are added into the solution, and then the solution is stirred at 25° C for 24 hours to obtain the polyimide acid slurry.

[Preparation of separator]

The soluble polymer slurry is added to the aforementioned polyimide acid slurry of 0%, 10%, 30%, and 50% by weight, and then it is stirred for 30 minutes. The obtained slurry is then coated on a glass plate to obtain a wet membrane, and then the wet membrane is soaked in different solvents to remove the soluble polymer to obtain wet membranes with different wettability. Afterwards, the wet membrane is heated in a vacuum oven at 230 °C for 60 minutes to cure the wet membrane for forming the separator. For example, the solvent may be deionized water or alcohol, such as ethanol.

[Testing the separator]

Table 1 is a comparison of the separator made by the aforementioned method and the commercial Celgard 2325 (PP/PE/PP) separator, wherein the electrolyte is 1M lithium hexafluorophosphate (LiPF$_6$) dissolved in a solvent with ethylene carbonate (EC) and dimethyl carbonate (DMC) (EC/DMC) having a 1:1 volume ratio. FIG. 2 is a schematic view of a contact angle test of the polyimide separator sample #4 of the present disclosure and the commercial Celgard 2325 separator to the electrolyte.
The contact angle in the Table 1 is achieved by measuring the contact angle of distilled water and electrolytic droplets on the separator with an optical contact angle analyzer (model OCA 40 Micro, made by Creating Nano Technologies Inc.).
The porosity in Table 1 is obtained by n-butyl alcohol absorption method. Specifically, the porosity may be measured by comparing the weight of the separator before and after soaking in n-butyl alcohol for two hours. As shown in the following equation:

$$P\ (\%) = \frac{M_w - M_d}{\rho V_d} x100$$

wherein P(%) means the porosity, Md means the weight of the separator before soaking in n-butyl alcohol, Mw means the weight of the separator after soaking in n-butyl alcohol, ρ means the density of the n-butyl alcohol, and Vd means the volume of the separator.

The electrolyte uptake shown in table 1 is measured by comparing the weight of the separator before and after soaked in the electrolyte for 2 hours under argon atmosphere. As shown in the following equation:

$$E_U(\%) = \frac{W_f - W_i}{W_i} \times 100\%$$

wherein EU (%) is electrolyte uptake, Wi is the weight of separator before soaked in the electrolyte, and Wf is the weight of separator after soaked in the electrolyte. As shown in Table 1, the samples 1-4 obtained in the present disclosure have smaller contact angles to both distilled water and the electrolyte when compared with the commercial separators (for example, the contact angle of the separator of the present disclosure may be less than 100 degrees for distilled water, and may be less than 60 degrees while for EC:DMC solvent), and the separator of the present disclosure also has a higher electrolyte uptake. That is to say, the separator of the present disclosure has better wettability (e.g. higher than 200 wt %) compared with the commercial separator. In addition, the separator of the present disclosure also has higher porosity to facilitate ion transfer, so that the electrical properties of the lithium-ion battery using this separator may be improved. It should be noted that although the thickness of the separator in Table 1 is 25 μm, the present disclosure is not limited thereto. The thickness of the separator may be changed based on requirements. For example, the thickness of the separator may be designed to be between about 5 μm and about 50 μm to meet various requirements. In addition, the porosity of the separator obtained in the embodiments of the present disclosure may be between about 45% and about 85%, such as between about 50% and about 80%. Suitable separator may be selected according to various requirements of electrical properties and mechanical strength.

Table 1

| Sample # | Amount of soluble polymer (%) | Thickness (μm) | Contact angle | | Porosity (%) | Electrolyte uptake (wt%) |
| --- | --- | --- | --- | --- | --- | --- |
| | | | Distilled water | EC: DMC | | |
| Celgard 2325 | 0 | 25 | 105.2 | 65.5 | 41 | 178 |
| 1 | 0 | 25 | 92.1 | 54.4 | 47 | 220 |
| 2 | 10 | 25 | 78.3 | 43.6 | 58 | 276 |
| 3 | 30 | 25 | 65.4 | 32.1 | 67 | 342 |
| 4 | 50 | 25 | 42.6 | 20.5 | 78 | 412 |

FIG. 3 shows the glass transition temperature (Tg) testing result of the polyimide separators in some embodiments of the present disclosure. In detail, a 15 mm long, 5 mm wide, and about 25 μm thick polyimide separator may be analyzed using a model Q400 thermomechanical analyzer (TMA) manufactured by TA Instruments under a nitrogen atmosphere. First, the separator is heated to 120°C and then completely cooled down to avoid the moisture in the separator affecting the test results. Next, the separator is heated at a temperature increase rate of 5°C/min within a temperature range of 100°C to 400°C. During the analysis, the loading received by the separator is 0.5g per μm thickness, such as 10g loading for a 25 μm separator in thickness.

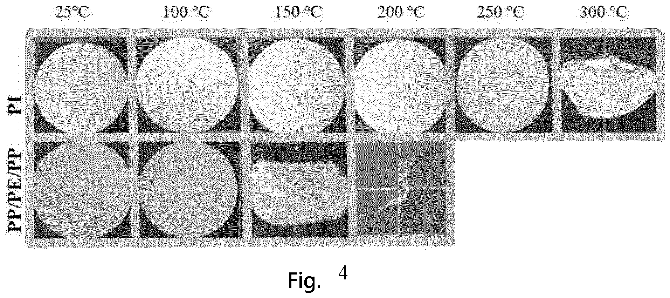

FIG. 4 shows the result of the heat resistance test of the polyimide separator and the commercial Celgard 2325 separator under different temperatures in some embodiments of the present disclosure, wherein the test result in FIG. 4 is measured by placing the separators in environments with different temperature for 30 minutes.

As shown in FIG. 3 and FIG. 4, the glass transition temperature of the polyimide separator of the present disclosure may be higher than 250°C, such as 289.13 °C for the polyimide separator shown in FIG. 3. In this way, the polyimide separator of the present disclosure may still be stable under high temperature. As shown in FIG. 4, the shape of the polyimide separator of the present disclosure remains stable below 250° C., and only begins to deform at 300° C. However, the commercial Celgard 2325 separator begins to deform at 150°C, and melts and disappears above 250°C, but the present disclosure is not limited thereto. For example, the polyimide separator of the present disclosure may begin to deform at 350°C in some embodiments. In other words, the glass transition temperature of the separator may be less than 350°C. Therefore, the polyimide separator of the present disclosure has excellent thermal stability compared with general commercial separators.

[Testing the battery properties]

Table 2 shows battery cycle test of the batteries made with the polyimide separator in some embodiments of the present disclosure and commercial Celgard 2325 separator. The separators are assembled into batteries, and then are baked for 1 hour in an environment of 140° C (higher than 120° C.) for 1 hour (higher than 30 minutes), followed by the testing. Specifically, the cathode and anode of the battery are lithium (Li) and lithium titanate ($Li_4Ti_5O_{12}$, LTO). The electrodes, separators, and electrolytes were assembled to be a CR2032 coin cell in argon atmosphere, and the battery cycle test was performed at room temperature with a BAT-750B battery cycler from UBIQ Company.

The data in Table 2 uses the capacity in the first cycle as 100% capacity. As shown in Table 2, the capacity of the battery using the commercial separator after baking degrades very fast, such as only 37.5% of the original capacity remains at the second cycle, while the polyimide separator of the present disclosure still has 100% capacity at the 20th cycle. Therefore, the polyimide separator of the present disclosure may resist high temperature when being used in a battery, so that the battery may be more suitable for the high temperature environment.

Table 2

| Separator / cycle time | Celgard 2325 | Polyimide |
|---|---|---|
| | Remained capacity (%) | |
| 1 | 100 | 100 |
| 2 | 37.5 | 100 |
| 8 | 25 | 100 |
| 16 | 20.8 | 100 |
| 20 | 19.4 | 100 |

In summary, a method for preparing a soluble polymer and a method for making a separator using the soluble polymer are provided in some embodiments of the present disclosure. The separator made by the method may have advantages such as high heat resistance, high electrolyte wettability, high porosity, etc. When the separator is applied in lithium-ion batteries, better performance and high safety may be obtained.

Although embodiments of the present disclosure and their advantages already have been described in detail, it should be understood that various changes, substitutions and alterations may be made herein without departing from the spirit and the scope of the disclosure as defined by the appended claims. Moreover, the scope of the present application is not intended to be limited to the particular embodiments of the process, machine, manufacture, and composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are also intended to include within their scope of such processes, machines, manufacture, and compositions of matter, means, methods, or steps. In addition, each claim herein constitutes a separate embodiment, and the combination of various claims and embodiments are also within the scope of the disclosure.

Claims

1. A method for forming soluble polymer, comprising polymerizing a dianhydride monomer, a diamine monomer, and solvent to form soluble polymer, wherein the dianhydride monomer comprises 4,4'-4,4'-oxydiphthalic anhydrid, 3,3',4,4'-biphenyltetracarboxylic dianhydride, and 4,4'-(Hexafluoroisopropylidene) diphthalic anhydride, and the diamine monomer comprises 3,4'-oxydianiline, 2,2'-Bis(trifluoromethyl)benzidine, and 3,3'-dimethylbenzidine.

2. The method as claimed in claim 1, wherein the soluble polymer comprises polyvinyl alcohol (PVA), polyimide (PI), polyvinylidene difluoride (PVDF), poly(methyl methacrylate) (PMMA), carboxymethylcellulose (CMC), and polyurethane (PU) elastomer.

3. The method as claimed in claim 1, wherein the molar ratio of the dianhydride monomer to the diamine monomer is between 0.95 and 1.1.

4. The method as claimed in claim 1, further comprising:

    adding the soluble polymer into first solvent to form a fiber; and
    washing the fiber by second solvent, wherein the first solvent and the second solvent comprise methanol.

5. The method as claimed in claim 4, further comprising adding the fiber into third solvent to get soluble polymer slurry.

6. The method as claimed in claim 5, wherein the third solvent comprises tetrahydrofuran (THF).

7. A method for forming a separator, comprising:
   adding the soluble polymer achieve in claim 1 into polyimide acid to get slurry, wherein in the slurry, the weight percentage of the soluble polymer in the polyimide acid is between 5% to 50%.

8. The method as claimed in claim 7, further comprising:

    coating the slurry to get a wet membrane; and
    adding solvent to the wet membrane, wherein the solvent comprises deionized water, ethanol, isopropanol, and acetone.

9. The method as claimed in claim 8, further comprising heating the wet membrane between 80°C and 250°C for 1 to 60 minutes to cure the wet membrane for gaining the separator.

10. The method as claimed in claim 9, wherein the glass transition temperature of the separator is higher than 250°C.

11. The method as claimed in claim 10, wherein the glass transition temperature of the separator is less than 350°C.

12. The method as claimed in claim 9, wherein the thickness of the separator is between $5\mu$m to $50\mu$m.

13. The method as claimed in claim 9, wherein the porosity of the separator is between 45% and 85%.

14. The method as claimed in claim 13, wherein the porosity of the separator is between 50% and 80%.

15. The method as claimed in claim 9, wherein the electrolyte uptake of the separator to a solution of 1M lithium hexafluorophosphate ($LiPF_6$) dissolved in a solvent with ethylene carbonate (EC) and dimethyl carbonate (DMC) (EC/DMC) having a 1:1 volume ratio is higher than 200wt%.

16. The method as claimed in claim 9, wherein the contact angle of the separator to distilled water is less than 100 degrees.

17. The method as claimed in claim 9, wherein the contact angle of the separator to a solution of 1M lithium hexafluor-ophosphate ($LiPF_6$) dissolved in a solvent with ethylene carbonate (EC) and dimethyl carbonate (DMC) (EC/DMC) having a 1:1 volume ratio is less than 60 degrees.

18. A method of testing a battery, comprising:

    placing the separator of claim 9 between a cathode and an anode in a shell;
    adding electrode between the cathode and the anode to form a battery; and
    heating the battery.

19. The method as claimed in claim 18, wherein the temperature during the heating he higher than 120°C.

**20.** The method as claimed in claim 18, wherein the time during the heating is longer than 30 minutes.

10

```
┌─────────────────────────────────────┐
│   Synthesizing a soluble polymer     │────── 12
└─────────────────────────────────────┘
                  │
                  ▼
┌──────────────────────────────────────────────────┐
│ Adding the soluble polymer into polyimide acid to  │──── 14
│                 obtain slurry                      │
└──────────────────────────────────────────────────┘
                  │
                  ▼
┌─────────────────────────────────────────┐
│ Coating the slurry to obtain a wet membrane │──── 16
└─────────────────────────────────────────┘
                  │
                  ▼
┌─────────────────────────────────────────┐
│   Soaking the wet membrane in solvent     │──── 18
└─────────────────────────────────────────┘
                  │
                  ▼
┌───────────────────────────────────────────────────┐
│ Heating and curing the wet membrane soaked in the   │──── 20
│          solvent to obtain a separator              │
└───────────────────────────────────────────────────┘
```

**Fig. 1**

Polyimide separator

Celgard 2325

**Fig. 2**

Tg=289.13°C

**Fig. 3**

Fig. 4

## INTERNATIONAL SEARCH REPORT

| International application No. |
|---|
| **PCT/CN2022/079936** |

| A. | CLASSIFICATION OF SUBJECT MATTER |
|---|---|
| | H01M 50/409(2021.01)i |

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电池, 隔膜, 聚酰亚胺, 二酐, 二胺, 聚偏二氟乙烯, 浆料, 铸膜, 湿膜, 孔隙率, 孔隙度, 接触角, 水滴角, 玻璃化转变温度, battery, diaphragm, polyimide, dianhydride, diamine, polyvinylidene, fluoride, slurry, cast, film, wet, porosity, contact, angle, glass, transition, temperature

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109817870 A (DONGGUAN DONGYANG GUANGKE RESEARCH & DEVELOPMENT CO., LTD.) 28 May 2019 (2019-05-28) description, paragraphs 6-81 | 1-9, 12 |
| Y | CN 109817870 A (DONGGUAN DONGYANG GUANGKE RESEARCH & DEVELOPMENT CO., LTD.) 28 May 2019 (2019-05-28) description, paragraphs 6-81 | 10-11, 13-20 |
| Y | CN 101412817 A (BYD CO., LTD.) 22 April 2009 (2009-04-22) description, page 3, paragraph 2 to page 12, paragraph 2 | 10-11, 13-14 |
| Y | CN 106229445 A (SOUTH CHINA UNIVERSITY OF TECHNOLOGY) 14 December 2016 (2016-12-14) description, paragraphs 6-119 | 15-20 |
| X | WO 2020150886 A1 (DONGGUAN HEC TECH R&D CO., LTD.) 30 July 2020 (2020-07-30) description, page 1, paragraph 5 to page 8, paragraph 3 | 1-9, 12 |
| Y | WO 2020150886 A1 (DONGGUAN HEC TECH R&D CO., LTD.) 30 July 2020 (2020-07-30) description, page 1, paragraph 5 to page 8, paragraph 3 | 10-11, 13-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2022** | **28 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/079936**

### C. DOCUMENTS CONSIDERED TO BE RELEVANT

| Category* | Citation of document, with indication, where appropriate, of the relevant passages | Relevant to claim No. |
|---|---|---|
| X | CN 109473605 A (SUN YAT-SEN UNIVERSITY) 15 March 2019 (2019-03-15) description, paragraphs 7-39 | 1-3 |
| X | CN 108003375 A (GUILIN ELECTRICAL EQUIPMENT SCIENTIFIC RESEARCH INSTITUTE CO., LTD.) 08 May 2018 (2018-05-08) description, paragraphs 5-18 | 1-3 |
| A | JP 2011057918 A (UBE INDUSTRIES LTD.) 24 March 2011 (2011-03-24) entire document | 1-20 |

Form PCT/ISA/210 (second sheet) (January 2015)

INTERNATIONAL SEARCH REPORT
Information on patent family members

| International application No. |
| --- |
| **PCT/CN2022/079936** |

| Patent document cited in search report | | | Publication date (day/month/year) | Patent family member(s) | Publication date (day/month/year) |
| --- | --- | --- | --- | --- | --- |
| CN | 109817870 | A | 28 May 2019 | None | |
| CN | 101412817 | A | 22 April 2009 | None | |
| CN | 106229445 | A | 14 December 2016 | None | |
| WO | 2020150886 | A1 | 30 July 2020 | None | |
| CN | 109473605 | A | 15 March 2019 | None | |
| CN | 108003375 | A | 08 May 2018 | None | |
| JP | 2011057918 | A | 24 March 2011 | None | |

Form PCT/ISA/210 (patent family annex) (January 2015)